# EUROPÄISCHE PATENTANMELDUNG

(11) **EP 3 023 752 A1**
(43) Veröffentlichungstag der Anmeldung: **25.05.2016**
(21) Anmeldenummer: 14193741.7
(22) Anmeldetag: 18.11.2014
(51) Int. Cl.: G01F 11/26, G01F 11/28

(54) **Flüssigkeitsspender und Austragkopf hierfür**

(71) Anmelder: Aptar Radolfzell GmbH, 78315 Radolfzell (DE)
(72) Erfinder: Greiner-Perth, Jürgen, 78244 Gottmadingen (DE); Rey, Pia, 78315 Radolfzell (DE)
(74) Vertreter: Patentanwaltskanzlei Cartagena

(57) **Zusammenfassung**

Dosierkopf und Flüssigkeitsspender.

Bekannt ist ein Dosierkopf (30) für einen Flüssigkeitsspender (10) mit den folgenden Merkmalen: Der Dosierkopf (30) umfasst mindestens eine Austragöffnung (50) zur Abgabe von Flüssigkeit aus einem Innenbereich des Dosierkopfes (30) in eine Umgebung. Er umfasst einen Dosierkörper (40) und einen Dosierkanal, innerhalb dessen der Dosierkörper (40) zwischen einer Schließstellung und einer Öffnungsstellung beweglich angeordnet ist. Der Dosierkörper (40) ist als Auftriebskörper ausgebildet und ist derart an den Dosierkanal angepasst, dass er bei der Bewegung in Richtung der Schließstellung zumindest phasenweise von zur Austragöffnung (50) strömender Flüssigkeit umströmt werden kann. Der Dosierkörper (40) ist derart an die Austragöffnung (50) angepasst, dass er in seiner Schließstellung die Austragöffnung (50) gegenüber dem Dosierkanal verschließt.

Es wird vorgeschlagen, bei einem solchen Dosierkopf auch folgende Merkmale zu realisieren: Der Dosierkopf (30) umfasst mindestens einen von der Austragöffnung getrennten Belüftungskanal (54), der über ein Einlassventil (66) verfügt, welches bei Unterdruck im Dosierkanal gegenüber der Umgebung öffnet.

## Beschreibung

Die Erfindung betrifft einen Dosierkopf für einen Flüssigkeitsspender sowie einen Flüssigkeitsspender mit einem solchen Dosierkopf.

Ein gattungsgemäßer Flüssigkeitsspender und ein entsprechender Dosierkopf sind aus der EP 2 746 733 A1 bekannt. Solche gattungsgemäßen Spender sind ebenso wie erfindungsgemäße Spender für die dosierte Abgabe von Flüssigkeiten verschiedener Viskositäten geeignet. Die Hauptanwendungfelder umfassen die Verwendung als Spender für pharmazeutische Flüssigkeiten wie bspw. Hustensaft, für kosmetische Flüssigkeiten wie Haarpflege- und Hautpflegeprodukte sowie für Lebensmittel wie Dips, Soßen, Ketchup, Senf und dergleichen.

Die gattungsgemäßen Flüssigkeitsspender verfügen über eine Austragöffnung zur Abgabe von Flüssigkeit sowie über einen Dosierkörper und einen Dosierkanal, innerhalb dessen der Dosierkörper zwischen einer Schließstellung und einer Öffnungsstellung beweglich angeordnet ist.

Der Dosierkörper ist als Auftriebskörper ausgebildet, so dass er in einer Überkopflage des Flüssigkeitsspenders, in der die Austragöffnung nach unten weist, seine der Austragöffnung abgewandte Öffnungsstellung einnimmt. Durch Druckbeaufschlagung der Flüssigkeit strömt diese am Dosierkörper vorbei in Richtung der Austragöffnung und bewegt hierbei bestimmungsgemäß den Dosierkörper gegen die Auftriebskraft in Richtung der der Austragöffnung zugewandten Schließstellung. In der Schließstellung verhindert der Dosierkörper den weiteren Zufluss von Flüssigkeit zur Austragöffnung und beendet somit den Austrag.

Gattungsgemäße Spender sind demnach dafür vorgesehen, eine zumindest in etwa gleichbleibende Flüssigkeitsmenge dadurch auszutragen, dass in einer Überkopflage des Spenders eine Druckbeaufschlagung der Flüssigkeit vorgesehen ist, durch die der aufgrund der Auftriebskraft in der Öffnungsstellung befindliche Dosierkörper in Richtung der Austragöffnung und somit in Richtung seiner Schließstellung verbracht wird. Die Dauer, die der Dosierkörper hierfür benötigt, hängt mit der derweil ausgetragenen Flüssigkeitsmenge ausreichend genau zusammen, so dass ein gattungsgemäßer Flüssigkeitsspender den Austrag etwa gleichbleibender Flüssigkeitsvolumina je Austragvorgang gewährleisten kann.

Der aus der EP 2 746 733 A1 bekannte Spender gattungsgemäßer Art nutzt seine Austragöffnung auch als Belüftungsöffnung, um innerhalb eines Flüssigkeitsspeichers des Spenders nach einem Austragvorgang einen Druckausgleich erzielen zu können. Bei Unterdruck innerhalb des Spenders wird Luft durch die Austragöffnung eingesogen.

Es wurde festgestellt, dass dieses Vorgehen verbesserungsbedürftig ist. Da die Austragöffnung eines gattungsgemäßen Spenders üblicherweise bezogen auf die Bewegungsrichtung des Dosierkörpers zentrisch zu diesem angeordnet ist und da die Austragöffnung in der Endlage des Dosierkörpers bestimmungsgemäß abdichtend im Bereich der Austragöffnung anliegt, kann sich die Situation einstellen, dass zwar Luft nach einem Austragvorgang durch die Austragöffnung hindurch eingesogen wird, diese sich jedoch an der Stirnfläche des Dosierkörpers sammelt, statt durch Vorbeiströmen an dieser gemeinsam mit der Auftriebskraft die Rückstellung des Dosierkörpers in die Öffnungsstellung zu bewirken. Nachteilig an der bekannten Gestaltung ist weiterhin, dass diese es erforderlich macht, die Austragöffnung ohne Ventil vorzusehen oder ein nur schwach wirkendes Ventil zu verwenden, welches bei Unterdruck im Dosierkanal das Einströmen von Luft gestattet. Beides kann dazu führen, dass der Spender zur Leckage neigt.

### AUFGABE UND LÖSUNG

Aufgabe der Erfindung ist es, einen gattungsgemäßen Spender dahingehend weiterzubilden, dass dieser die genannten Nachteile des Standes der Technik verhindert oder mindert.

Erfindungsgemäß wird dies dadurch erzielt, dass der Dosierkopf mindestens einen von der Austragöffnung getrennten Belüftungskanal umfasst. Dieser Belüftungskanal verfügt über ein Einlassventil, welches bei Unterdruck den Dosierkanal gegenüber der Umgebung öffnet.

Der erfindungsgemäße Dosierkopf verfügt demnach über eine oder mehrere Austragöffnungen, durch die Flüssigkeit aus einem Inneren des mit dem Dosierkopf versehenen Spenders abgegeben werden kann, bis der Dosierkörper innerhalb des Dosierkanals durch die in Richtung der Austragöffnung strömende Flüssigkeit bis in seine Schließstellung bewegt wurde. Der Dosierkanal und der Dosierkörper sind zu diesem Zweck derart aufeinander abgestimmt, dass bei dem sich im Spender bei Betätigung desselben einstellenden Überdruck die am Dosierkörper vorbeiströmende Flüssigkeit diesen entgegen seiner Auftriebskraft verlagert. Der Dosierkanal kann umlaufend geschlossen oder auch partiell offen sein. Er kann insbesondere auch abschnittsweise durch einen Flaschenhals des Spenders gebildet werden. Der Dosierkopf verfügt über Anschläge, die die Schließstellung und die gegenüberliegende Öffnungsstellung des Dosierkörpers im Dosierkanal bestimmen.

Damit der Dosierkörper vor Beginn eines Austragvorgangs seine Öffnungsstellung einnimmt, ist er als Auftriebskörper ausgebildet. Dies bedeutet, dass er eine geringere Dichte als die auszutragende Flüssigkeit aufweist. Sofern eine Flüssigkeit ausgetragen werden soll, deren Dichte mit der von Wasser übereinstimmt, sollte der Auftriebskörper somit eine Dichte < 1 g/cm³ aufweisen. Je nach auszutragender Flüssigkeit kann die Dichte des Auftriebskörpers jedoch auch größer sein, solange sie ausreichend gering ist, um ein Aufschwimmen auf der auszutragenden Flüssigkeit zu gestatten.

In der der Austragöffnung zugewandten Schließstellung schließt der Dosierkörper die Austragöffnung, wobei dies kein unmittelbares Verschließen des innenseitigen Einlasses der Austragöffnung sein muss, sondern auch ein Schließen der Austragöffnung unter Bildung eines zwischen der Austragöffnung und dem Dosierkörper verbleibenden Isolierbereichs. Wesentlich ist, dass die Austragöffnung gegenüber dem jenseits des Dosierkörpers verbleibenden Teil des Dosierkanals und insbesondere gegenüber dem Flüssigkeitsspeicher verschlossen ist.

Die Verwendung eines separaten Belüftungskanals ist geeignet, die Rückkehr des Dosierkörpers aus seiner Schließstellung in Richtung seiner Öffnungsstellung zu begünstigen. Durch die vorzugsweise exzentrische Anordnung des Belüftungskanals und insbesondere vorzugsweise der mehreren Belüftungskanäle gegenüber der Austragöffnung, strömt einströmende Luft tendenziell gegen Randbereiche des Dosierkörpers, was dessen Neigung erhöht, die Schließstellung zu verlassen. Damit der Austrag dennoch zuverlässig durch die Austragöffnung hindurch erfolgt, ist dem mindestens einen Belüftungskanal ein Einlassventil zugeordnet, welches während des Austragvorgangs schließt und welches bei Unterdruck im Dosierkanal im Zuge der Rücküberführung des Dosierkörpers in Richtung seiner Öffnungsstellung geöffnet ist.

Der separate Belüftungskanal bietet den Vorteil, dass die Luft nicht in den bestimmungsgemäß isolierten Bereich einströmen muss, der durch den Dosierkörpers gebildet wird, sondern unmittelbar in den gegenüber dem Dosierkanal nicht isolierten Bereich einströmen kann.

Die Verwendung eines separaten Belüftungskanals ist weiterhin insbesondere von Vorteil, wenn der Austragöffnung ein Auslassventil zugeordnet ist. Da durch die Austragöffnung hindurch keine Luft in den Spender, an dem der Dosierkopf vorgesehen ist, eingesogen werden muss, kann hier ein Auslassventil Verwendung finden, welches bei Überdruck im Dosierkanal gegenüber der Umgebung öffnet und welches insbesondere vorzugsweise bei in etwa identischem Druck innerhalb des Spenders und in der Umgebung geschlossen ist. Ein solches Auslassventil verhindert wirksam die Leckage des Spenders.

Sowohl für das Einlassventil als auch für das Auslassventil gilt, dass diese vorzugsweise über eine elastisch verformbare Ventilfläche verfügen, welche sich im entspannten Zustand an einen Ventilsitz anlegt und druckbedingt öffnet oder welche im entspannten Zustand gegenüber einem Ventilsitz beabstandet ist und durch Druckbeaufschlagung unter Schließen des Ventils sich an den Ventilsitz anlegen kann.

Als vorteilhaft wird es weiterhin angesehen, wenn das Auslassventil und das Einlassventil jeweils über elastisch verformbare Ventilflächen verfügen, die einstückig miteinander ausgebildet sind. Dies gestattet es, mit nur einem Bauteil sowohl die Funktion des Auslassventils als auch des Einlassventils zur Verfügung zu stellen. Dies ist nicht nur in Hinblick auf die Bauteilzahl relevant, sondern erleichtert auch die Montage erheblich. Eine vorteilhafte Möglichkeit sieht vor, dass ein Ventilkörper einen ringförmigen Befestigungsbereich aufweist, der die Ventilfläche des Auslassventils umgibt und an dem außenseitig die Ventilfläche des Einlassventils vorgesehen ist.

Grundsätzlich ist es nicht zwingend, dass der Belüftungskanal in unmittelbarer Nähe der Austragöffnung vorgesehen ist. Er kann bei einem erfindungsgemäßen Spender stattdessen auch anderweitig angeordnet sein, solange er den Zufluss von Luft aus der Umgebung in den Flüssigkeitsspeicher des Spenders ermöglicht. Dennoch wird es als vorteilhaft angesehen, wenn der Dosierkörper in seiner Schließstellung einen an die Austragöffnung angrenzenden Isolierbereich begrenzt, der durch den Dosierkörper gegenüber dem Dosierkanal jenseits des Dosierkörpers getrennt ist. Der Belüftungskanal mündet vorzugsweise außerhalb dieses Isolierbereichs, so dass die einströmende Luft nicht in den isolierten Bereich innerhalb des Dosierkopfes einströmt, sondern an diesem vorbei. Das Lösen des Dosierkörpers aus seiner der Austragöffnung zugewandten Endlage wird hierdurch begünstigt.

Besonders von Vorteil ist es, wenn der mindestens eine Belüftungskanal an seiner der Umgebung abgewandten Seite derart mündet, dass einströmende Luft auf dem Weg in Richtung des Dosierkanals am Dosierkörper vorbeiströmen muss. Dies wird insbesondere erreicht, wenn der Belüftungskanal unmittelbar benachbart zur Austragöffnung vorgesehen ist, so dass einströmende Luft in den in der Überkopflage befindlichen Dosierkopf derart mündet, dass sie beim Aufsteigen in Richtung des Flüssigkeitsspeichers zwangsläufig auf den Dosierkörper trifft oder diesen umströmt.

Die Zuverlässigkeit der Trennung des Dosierkörpers von einer korrespondierenden Dichtfläche bei Anordnung der Schließstellung wird weiter begünstigt, wenn der Dosierkopf eine Mehrzahl von Belüftungskanälen umfasst, die jeweils über ein Einlassventil verfügen. Dabei ist es besonders von Vorteil, wenn die Belüftungskanäle bezogen auf die Mittelachse des Dosierkörpers und vorzugsweise bezogen auf die auf dieser Mittelachse liegende Austragöffnung auf gegenüberliegenden Seiten angeordnet sind. Finden mehr als zwei Belüftungskanäle Verwendung, so münden diese vorzugsweise auf einer die Mittelachse und/oder die Austragöffnung umgebenden Kreisbahn.

Die Verwendung von mehreren Belüftungskanälen ist auch vorteilhaft in Hinblick auf die Rückbewegung des Dosierkörpers, da dieser hierdurch gleichmäßig durch die einströmende Luft kraftbeaufschlagt wird. Dies wird nochmals verbessert, wenn mehr als zwei Belüftungskanäle in den Isolierbereich zwischen Austragöffnung und in der Schließstellung befindlichen Dosierkörper münden.

Auch bei mehr als einem Belüftungskanal mit Einlassventil ist es von Vorteil, wenn mehrere Ventile zumindest abschnittsweise einstückig ausgebildet sind. So können die Einlassventile mehrerer Belüftungskanäle jeweils mit verformbaren Ventilflächen ausgebildet sein, die einstückig zusammenhängen und dadurch leichter zu fertigen und zu montieren sind. Insbesondere können auch elastisch verformbare Ventilflächen des Auslassventils zum einen und mehrerer Einlassventile zum anderen einstückig ausgebildet sein. Als Material für die elastischen Ventilflächen kommen typische im Ventilbereich verwendete elastisch verformbare Kunststoffe in Betracht. Auch Gummi und anderweitige die Anforderungen an die elastische Verformbarkeit und die Dichtigkeit erfüllende Materialien können hier verwendet werden.

Wenn mehrere Belüftungskanäle vorgesehen sind, kann es auch von Vorteil sein, eine gemeinsame Ventilfläche vorzusehen, die gemeinsam die mehreren Belüftungskanäle verschließt. So ist insbesondere eine Ausgestaltung vorteilhaft, bei der mehrere kreisförmig angeordnete Einlassventile von einer gemeinsamen Ventilfläche verschlossen werden können, die an einem inneren oder äußeren Haltebereich festgelegt ist. Diese Ventilfläche kann die Mündungen der verschiedenen Belüftungskanäle gleichsam schirmartig überspannen und sich bei Unterdruck im Spender gemeinsam von diesen Mündungen lösen. Dies begünstigt ein homogenes Einströmen der Luft und hierdurch bedingt einen besonders störungsfreien Betrieb.

Der erfindungsgemäße Dosierkopf findet bestimmungsgemäß als Teil eines Flüssigkeitsspen-ders Verwendung, der neben dem Dosierkopf auch einen Flüssigkeitsspeicher zur Aufnahme von Flüssigkeit vor deren Abgabe umfasst.

Dabei kann der Dosierkopf als separate und für sich genommen funktionstaugliche Einheit an einem Flüssigkeitsspeicher befestigt sein. Insbesondere von Vorteil ist es jedoch, wenn der Dosierkopf zumindest teilweise integral mit dem Flüssigkeitsspeicher verbunden ist. So kann insbesondere eine Wandung des Flüssigkeitsspeichers im Bereich eines Flaschenhalses des Spenders gleichzeitig eine Wandung des Dosierkanals darstellen.

Die spezifische Dichte des Dosierkörpers ist auf die in diesem Flüssigkeitsspender zu verwendende Flüssigkeit derart angepasst, dass das gewünschte Verhalten als Auftriebskörper erzielt wird.

Als besonders vorteilhaft wird ein Flüssigkeitsspender angesehen, dessen Flüssigkeitsspeicher als Quetschflasche ausgebildet ist. Eine solche Quetschflasche zeichnet sich dadurch aus, dass sie Wandungen aufweist, die durch unangestrengte Kraftbeaufschlagung eines erwachsenen Menschen ausreichend verformt oder gegeneinander verlagert werden können, um das Innenvolumen des Flüssigkeitsspeichers zum Zwecke eines Austrags zu reduzieren und die nach Wegfall der Kraftbeaufschlagung selbsttätig in ihre Ausgangslage zurückkehren.

### KURZBESCHREIBUNG DER ZEICHNUNGEN

Weitere Aspekte und Vorteile der Erfindung ergeben sich aus den Ansprüchen sowie der nachfolgenden Beschreibung anhand eines Ausführungsbeispiels der Erfindung. Dabei zeigt:
- Fig. 1: einen erfindungsgemäßen Spender in einer geschnittenen Gesamtdarstellung,
- Fig. 2: den Spender der Fig. 1 in einer Draufsicht und
- Fig. 3A - 3D: den Spender der Fig. 1 und 2 während eines Austragvorgangs.

### DETAILLIERTE BESCHREIBUNG DES AUSFÜHRUNGSBEISPIELS

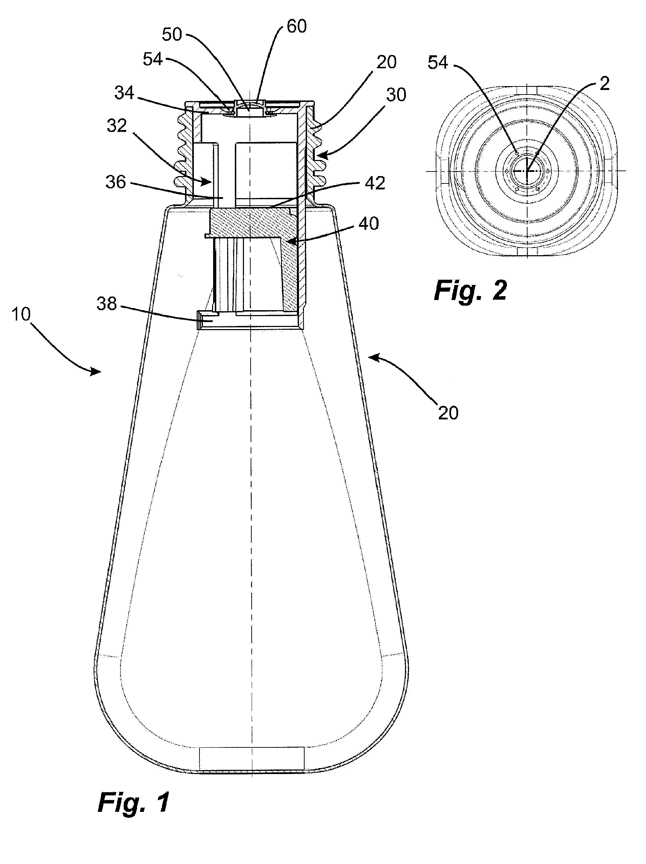

Fig. 1 zeigt einen erfindungsgemäßen Flüssigkeitsspender 10 in einer Schnittdarstellung. Dieser Spender 10 verfügt über eine Quetschflasche 20 zur Aufnahme von auszutragender Flüssigkeit vor deren Austrag, insbesondere pharmazeutischen Flüssigkeiten. Der Spender findet insbesondere für solche Flüssigkeiten Verwendung, bei denen die dosierte Abgabe üblicherweise in einen separaten Behälter wie einen Becher erfolgt. Eine typische Anwendung eines solchen Spenders ist die Anwendung für Hustensirup und dergleichen.

Am oberen Ende schließt sich an den Flüssigkeitsspeicher ein Dosierkopf 30 an. Dieser Dosierkopf wird außenseitig insbesondere durch einen Flaschenhals 22 des Flüssigkeitsspeichers 20 begrenzt, in den ein Käfig 32 eingesetzt ist, der zusammen mit dem Flaschenhals 22 die wesentlichen Komponenten eines Dosierkanals bildet. Der Käfig 32 verfügt über eine Stirnfläche 34 sowie über sich von der Stirnfläche in den Flüssigkeitsspeicher 20 hinein erstreckende Streben 36, die an ihrem bezogen auf Fig. 1 unteren Ende durch einen Ring 38 miteinander verbunden sind.

In dem Käfig 32 ist ein Dosierkörper 40 eingesetzt. Dieser Dosierkörper weist eine in etwa zylindrische Grundform mit einer planen, der Austragöffnung zugewandten Anlagefläche 42 auf. Der Dosierkörper 40 ist in Richtung eines Pfeils 4 zwischen zwei Endlagen verlagerbar. Die Endlage, die der Dosierkörper 40 in Fig. 1 einnimmt, wird vorliegend als Öffnungsstellung bezeichnet.

Die Stirnfläche 34 des Käfigs 32 verfügt über eine große zentrische Durchbrechung 50 sowie eine Vielzahl kreisförmig um eine Mittelachse 2 angeordneter kleinerer Durchbrechungen 54, wie auch aus der Draufsicht der Fig. 2 ersichtlich ist. Hier ist zu ersehen, dass die Durchbrechungen 54 auf einer die Austragöffnung und die Mittelachse 2 umgebenden Kreisbahn liegen.

Die zentrische Durchbrechung 50 ist Teil eines Auslasskanals. Die kleineren Durchbrechungen 54 sind jeweils Teil von Belüftungskanälen. In die zentrische Durchbrechung 50 ist ein elastisches Ventilbauteil 60 eingesetzt, welches einen umlaufenden Haltebereich 62 aufweist sowie innenseitig des Haltebereichs zusammenwirkende Ventilklappen 64, die gemeinsam ein Schlitzventil bilden. Außenseitig des Haltebereichs 62 ist eine schirmartig umlaufende Ventilfläche 66 vorgesehen, welche die kleineren Durchbrechungen 54 überdeckt.

Wenn keine Druckdifferenz zwischen einem Inneren des Spenders 10 und einer Umgebung gegeben ist, liegen die Ventilflächen 64 derartig aneinander an, dass die durch sie mitgebildete Austragöffnung geschlossen ist. Bei diesen Druckverhältnissen liegt weiterhin die schirmartige Ventilfläche 66 an der Innenseite der Stirnfläche 34 derart an, so dass auch die die Belüftungskanäle bildenden Durchbrechungen 54 dicht verschlossen sind. In diesem Zustand der Fig. 1 ist somit keine ungewollte Leckage des Spenders zu befürchten, selbst wenn dieser in eine Überkopflage gebracht wird.

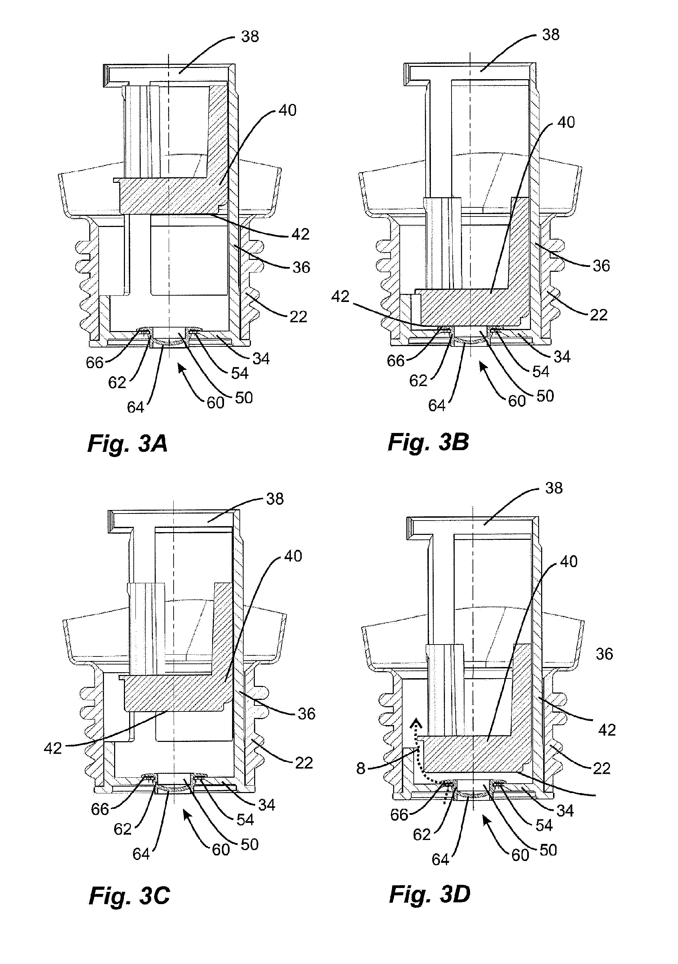

Zum Zwecke der bestimmungsgemäßen Verwendung wird der Spender 20 in eine Überkopflage gebracht, wie es aus den Fig. 3A bis 3D ersichtlich ist.

Da der Dosierkörper 40 als Auftriebskörper ausgebildet ist und hierfür eine geringere Dichte als die der auszutragenden Flüssigkeit aufweist, nimmt er nach Verbringen des Spenders in die Überkopflage die Endlage ein, die der Fig. 3A entnommen werden kann. Er befindet sich in seiner der Austragöffnung abgewandten Öffnungslage.

Wird nun die Flüssigkeit im Flüssigkeitsspeicher 20 durch Zusammendrücken der Wandungen druckbeaufschlagt, so öffnet sich unter diesem Überdruck das durch die Ventilflächen 64 gebildete Auslassventil. Die zur Austragöffnung gelangende Flüssigkeit strömt am Dosierkörper 40 vorbei und reißt diesen hierbei gegen die Auftriebskraft mit.

Fig. 3B zeigt den Spender während des Austragvorgangs. Die fortgesetzte Bewegung des Dosierkörpers 40 in Richtung der Austragöffnung endet, wenn der Dosierkörper 40 seine austragsöffnungsseitige Endlage, die Schließstellung, erreicht hat. Er legt sich hier mit seiner Stirnseite 42 an die Innenseite des Ventilbauteils 60 an und schließt somit den Zugang von Flüssigkeit aus dem Flüssigkeitsspeicher 20 zum Austragkanal. Der Austragvorgang ist beendet. Diesen Zustand zeigt Fig. 3C.

Zur Vorbereitung des Spenders auf einen erneuten Austragvorgang wird die Kraftbeaufschlagung der Quetschflasche 20 beendet, wobei hierdurch ein Unterdruck in dieser entsteht, da die verbleibende Flüssigkeitsmenge geringer ist als vor dem Austragvorgang. Dieser Unterdruck bewirkt, dass sich die schirmartige Ventilfläche 66 von den Belüftungsdurchbrechungen 54 löst und hier ein Einströmen von Luft aus seiner Umgebung möglich wird. Begünstigt durch die einstückige Gestaltung der Ventilfläche 66 werden alle Belüftungsöffnungen 54 gleichzeitig freigegeben. Die einströmende Luft strömt in der durch den Pfeil 8 in Fig. 3D dargestellten Weise am Dosierkörper 40 vorbei in Richtung des Flüssigkeitsspeichers 20. Hierdurch wird der Ventilkörper 40 zuverlässig vom Ventilbauteil 60 getrennt und anschließend aufgrund der vorbeiströmenden Luft sowie aufgrund seiner geringen Dichte zurück bis in die Ausgangsposition verbracht, die in Fig. 1 und in Fig. 3A dargestellt ist.

Bei der dargestellten Gestaltung erfolgt das Einströmen der Luft alleine über die Belüftungsöffnungen 54. Die Ventilflächen 64 sind dagegen aufgrund ihrer domartigen Formgebung so beschaffen, dass der Unterdruck in der Quetschflasche das durch sie gebildete Ventil geschlossen hält, so dass es hier nicht zu einem Einströmen von Luft kommt.

Nachdem der Dosierkörper 40 wieder seine Ausgangsposition erreicht hat, kann ein erneuter Austragvorgang beginnen.

## Patentansprüche

1. Dosierkopf (30) für einen Flüssigkeitsspender (10) mit den folgenden Merkmalen:
a. der Dosierkopf (30) umfasst mindestens eine Austragöffnung (50) zur Abgabe von Flüssigkeit aus einem Innenbereich des Dosierkopfes (30) in eine Umgebung, und
b. der Dosierkopf (30) umfasst einen Dosierkörper (40) und einen Dosierkanal, innerhalb dessen der Dosierkörper (40) zwischen einer Schließstellung und einer Öffnungsstellung beweglich angeordnet ist, und
c. der Dosierkörper (40) ist als Auftriebskörper ausgebildet, und
d. der Dosierkörper (40) ist derart an den Dosierkanal angepasst, dass er bei der Bewegung in Richtung der Schließstellung zumindest phasenweise von zur Austragöffnung (50) strömender Flüssigkeit umströmt werden kann, und
e. der Dosierkörper (40) ist derart an die Austragöffnung (50) angepasst, dass er in seiner Schließstellung die Austragöffnung (50) gegenüber dem Dosierkanal verschließt,
**gekennzeichnet durch** die folgenden Merkmale:
f. der Dosierkopf (30) umfasst mindestens einen von der Austragöffnung getrennten Belüftungskanal (54), und
g. der Belüftungskanal (54) verfügt über ein Einlassventil (66), welches bei Unterdruck im Dosierkanal gegenüber der Umgebung öffnet.

2. Dosierkopf (30) nach Anspruch 1 mit dem folgenden Merkmal:
a. die Austragöffnung (50) verfügt über ein Auslassventil (64), welches bei Überdruck im Dosierkanal gegenüber der Umgebung öffnet.

3. Dosierkopf nach Anspruch 2 mit den folgenden Merkmalen:
a. das Auslassventil (64) und das Einlassventil (66) verfügen über zum Zwecke des Öffnens und Schließens elastisch verformbare Ventilflächen, und
b. die Ventilflächen des Auslassventils (64) und des Einlassventils (66) sind einstückig miteinander ausgebildet.

4. Dosierkopf (30) nach einem der vorstehenden Ansprüche mit den folgenden Merkmalen:
a. der Dosierkörper (40) begrenzt in seiner Schließstellung einen die Austragöffnung (50) umfassenden Isolierbereich, der vom Dosierkörper (40) gegenüber dem Dosierkanal getrennt ist, und
b. der mindestens eine Belüftungskanal (54) mündet an seiner der Umgebung abgewandten Seite außerhalb des Isolierbereichs.

5. Dosierkopf (30) nach einem der vorstehenden Ansprüche mit dem folgenden Merkmal:
a. der mindestens eine Belüftungskanal (54) mündet an seiner der Umgebung abgewandten Seite derart, dass einströmende Luft auf dem Weg in Richtung des Dosierkanals am Dosierkörper (40) vorbeiströmen muss.

6. Dosierkopf (30) nach einem der vorstehenden Ansprüche mit dem folgenden Merkmal:
a. der mindestens eine Belüftungskanal (54) ist exzentrisch zu einer Mittelachse (2) des Dosierkörpers (40) angeordnet.

7. Dosierkopf (30) nach Anspruch 6 mit den folgenden Merkmalen:
a. der Dosierkopf (30) umfasst eine Mehrzahl von Belüftungskanälen (54), die über ein Einlassventil (66) verfügen, welches bei Unterdruck im Dosierbereich gegenüber der Umgebung schließt, und
b. die Belüftungskanäle (54) sind bezogen auf die Mittelachse (2) des Dosierkörpers auf gegenüberliegenden Seiten angeordnet oder auf einer zur Mittelachse (2) des Dosierkörpers konzentrischen Kreisbahn angeordnet.

8. Flüssigkeitsspender (10) mit den folgenden Merkmalen:
a. der Flüssigkeitsspender (10) verfügt über einen Flüssigkeitsspeicher (20) zur Aufnahme von Flüssigkeit vor deren Abgabe, und
b. der Flüssigkeitsspender (10) verfügt über einen Dosierkopf (30) zur Abgabe der Flüssigkeit,
**gekennzeichnet durch** die folgenden Merkmale:
c. der Dosierkopf (30) ist nach einem der Ansprüche 1 bis 7 ausgestaltet.

9. Flüssigkeitsspender (10) nach Anspruch 8 mit dem folgenden Merkmal:
a. der Flüssigkeitsspeicher (20) ist als Quetschflasche ausgebildet, die durch Verformung die Druckbeaufschlagung enthaltener Flüssigkeit ermöglicht.
